# EUROPEAN PATENT APPLICATION

(11) **EP 2 009 630 A1**
(43) Date of publication of application: **31.12.2008**
(21) Application number: 08252232.7
(22) Date of filing: 30.06.2008
(51) Int. Cl.: G11B 15/60, G11B 23/087

(54) **Continuous micro-groove roller technology**

(30) Priority: 29.06.2007 US 824561
(71) Applicant: Quantum Corporation, San Jose, CA 95110 (US)
(72) Inventor: Tresso, Riccardo James, Westminster, Colorado 80031 (US); Vega, Michael J., Longmont, Colorado 80501 (US); Lemmon, Michael J., Arvada, Colorado 80005 (US)
(74) Representative: Charig, Raymond Julian

(57) **Abstract**

A guide roller mounted in a tape drive for reducing mechanical noise associated with travel of a magnetic tape medium in a tape path is provided. The guide roller includes a cylindrical barrel, which is rotatably coupled to a tape drive. The cylindrical barrel rotates as the magnetic tape medium is guided by the guide roller as it travels through the tape path. A continuous helical groove forms a spiral on the outer surface of the cylindrical barrel along the length of the cylindrical barrel. The continuous helical groove forms contiguous rings of the spiral.

## Description

### BACKGROUND OF THE INVENTION

Storage subsystems, such as magnetic tape libraries, are widely used for storing information in digital form. Tape storage subsystems typically include one or more tape drives for reading and writing data to removable tape cartridges.

Magnetic tape cartridges have been used to conveniently and efficiently store and handle magnetic recording media for tape drives. One type of tape cartridge consists of a substantially rectangular exterior cartridge housing and a single reel containing a magnetic tape positioned within the housing. The cartridge housing includes an upper housing section and a lower housing section that substantially enclose the magnetic tape. The tape includes a cartridge leader. The cartridge leader becomes exposed through an opening in the cartridge housing during insertion of the cartridge into the tape drive. The tape drive is then able to engage and retrieve the tape from the cartridge for recording and/or playback.

As the tape is retrieved, the thin magnetic tape is typically spooled between a take-up reel and a supply reel. Guide rollers within the tape drive guide the tape medium across the magnetic read/write head for performing read/write operations. However, as thicknesses of tape media and the width of data tracks on tape media continue to decrease, while tape drive speed increases, with new technological improvements, conventional guide rollers may not perform as well. Furthermore, technological improvements allow for narrower tape tracks, which increase the data density of the magnetic tape. This decreases the acceptable and allowable amount of track following error. Therefore, tape drives often fail due to variation in system parameters, such as an insufficient head/tape interface, poor guide roller performance, or media variations, resulting in poor tracking performance.

Therefore, it is important to effectively guide the tape medium to the read/write head, minimizing damage to the tape and reducing lateral tape motion (LTM), so that the data is read or written accurately.

Previously, other methods have been used to reduce lateral tape motion (LTM) and spurious noise. These methods include using offset rollers, tapered rollers, crowned rollers, spiral macro-grooved rollers, or any combination thereof.

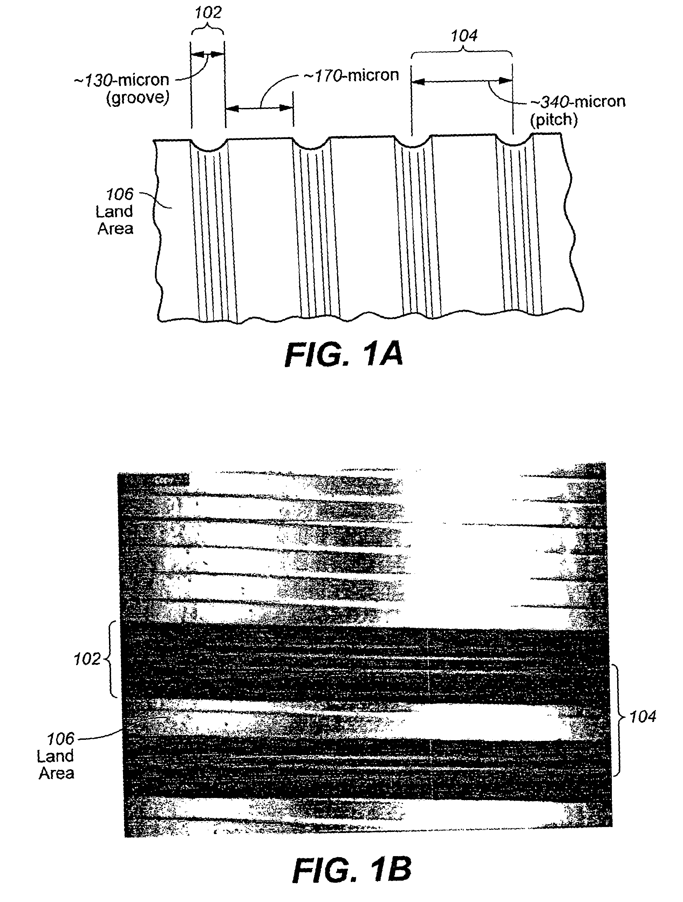

Figures 1 A and 1 B illustrate an example of a macro-groove spiral. The macro-groove has features such as width of the groove 102, pitch 104, and land area 106. An example of the dimensions may be a 130-micron width, a 170-micron land area, and a 340-micron pitch. In the spiral macro-groove example, the spiral pitch is not equal to the spiral width.

Spiral grooved rollers improve the coupling between the roller and tape by reducing the air bearing between the two surfaces. The spiral feature increases friction force and aggressively constrains the lateral tape motion. However, magnetic tape media is thinner than it was previously, moving from about a 10 micrometer to a 6 micrometer thickness. Furthermore, current tape drives operate at higher speeds than previous tape drives. Therefore, implementing aggressive macro-groove spirals may create tape damage and high frequency buckling events with thin magnetic media at high speeds.

In high speed applications utilizing thinner magnetic media, minimizing tape damage and mechanical disturbances while improving tracking performance is desired.

### BRIEF SUMMARY OF THE INVENTION

In accordance with embodiments of the present invention, a guide roller mounted in a tape drive to reduce mechanical noise associated with travel of a magnetic tape medium in a tape path is provided. The guide roller includes a cylindrical barrel, which is rotatably coupled to a tape drive. The cylindrical barrel rotates as the magnetic tape medium is guided by the guide roller as it travels through the tape path. A continuous helical groove forms a spiral on the outer surface of the cylindrical barrel along the length of the cylindrical barrel. The continuous helical groove forms contiguous rings of the spiral.

Other features and aspects of the invention will become apparent from the following detailed description, taken in conjunction with the accompanying drawings which illustrate, by way of example, the features in accordance with embodiments of the invention. The summary is not intended to limit the scope of the invention, which is defined solely by the claims.

### BRIEF DESCRIPTION OF THE DRAWINGS

Figure 1A shows a perspective view of a spiral macro-groove;

Figure 1B shows a magnified view of a spiral macro-groove;

Figure 2A shows a perspective view of a spiral micro-groove according to embodiments of the invention;

Figure 2B shows a magnified view of a spiral micro-groove according to embodiments of the invention;

Figure 3A shows an embodiment of a roller including spiral micro-grooves;

Figure 3B shows an embodiment of a magnified view of the spiral micro-groove of Figure 3A; and

Figure 4 shows an embodiment of a tape drive system.

The present invention and its various embodiments are better understood upon consideration of the detailed description below in conjunction with the accompanying drawings and claims.

In the following description, reference is made to the accompanying drawings which form a part thereof, and which illustrate several embodiments of the present invention. It is understood that other embodiments may be utilized and structural and operational changes may be made without departing from the scope of the present invention. The use of the same reference symbols in different drawings indicates similar or identical items.

### DETAILED DESCRIPTION OF THE INVENTION

The following description is presented to enable any person of ordinary skill in the art to make and use the invention. Descriptions of specific materials, techniques, and applications are provided only as examples. Various modifications to the examples described herein will be readily apparent to those of ordinary skill in the art, and the general principles defined herein may be applied to other examples and applications without departing from the spirit and scope of the invention. Thus, the present invention is not intended to be limited to the examples described and shown, but is to be accorded the scope consistent with the appended claims.

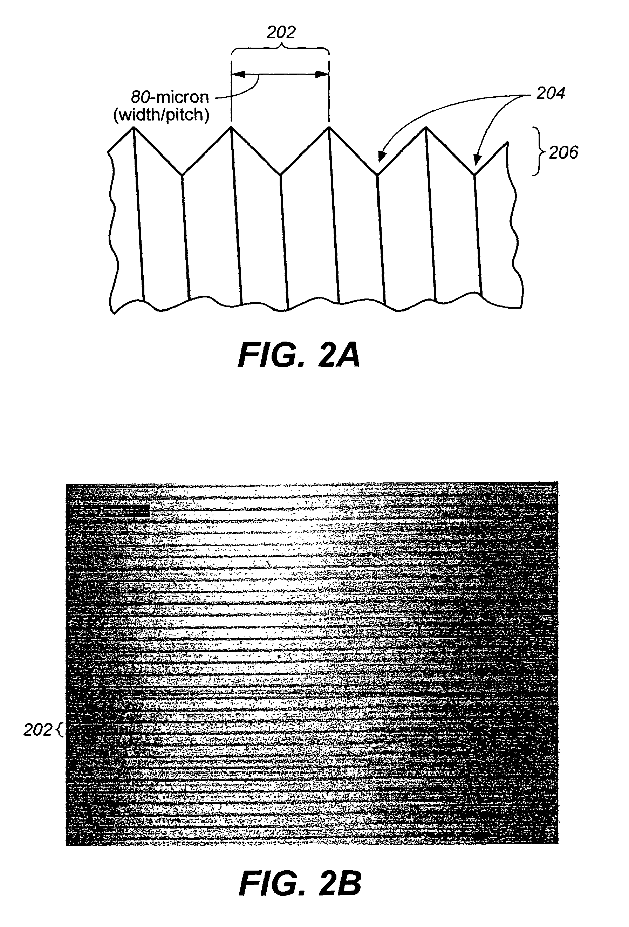

Figure 2A illustrates a perspective view of the surface of the cylindrical barrel of the guide roller according to embodiments of the invention. Grooves 204 are contiguous, so that there are no land areas between the grooves. Therefore, the pitch of the grooves and the width of the grooves are substantially the same dimension. The pitch/width of the micro-groove 202, in this embodiment, measures 80 microns. In some embodiments, the width/pitch may be, but is not limited to, 80 ± 50 microns. The groove depth 206 may be 0.2000 microns.

Embodiments of the invention alleviate the aforementioned disadvantages by implementing Continuous Micro-Groove (CMG) technology. Through well controlled manufacturing processes, CMG according to embodiments of the invention places a spiral micro-groove on the surface along the entire length of the guide roller cylindrical barrel, from flange to flange. The micro-grooves may provide at least 4X the resolution than current guide rollers. According to embodiments of the invention, there are no flat portions (or land areas) between the grooves as is the case with macro-groove designs (see Figures 1A and 1B). Contiguous spiral grooves according to embodiments of the invention provide control over the tape by decreasing roller surface disturbances, which minimizes tape damage.

Figure 2B illustrates a magnified view of the surface of a guide roller surface having micro-grooves according to embodiments of the invention. Contiguous grooves are shown with a substantially similar pitch and width 202. The roughness of the surface having micro-grooves according to embodiments of the invention is characterized by well-known roughness parameters.

Surface characteristics are critical parameters utilized in engineering evaluation. A roughness profile may be measured with a profilometer. Several examples of surface amplitude parameters are:
Rₐ: Arithmetic average of all departures of the roughness profile from the centerline within the evaluation length;
Rᵥ: Depth of the lowest point below centerline within the sampling length;
Rₚ: Height of the highest point above centerline within the sampling length;
Rᵥₘ: Mean value of Rᵥ in five consecutive sampling lengths;
Rₚₘ: Mean value of Rₚ in five consecutive sampling lengths.

In the embodiment shown in Figure 2B, Rₐ is 0.0750-microns, and Rᵥ and Rₚ both measure 0.1500-microns. The surface shown in Figure 2B is the tape bearing surface of a guide roller in a tape drive.

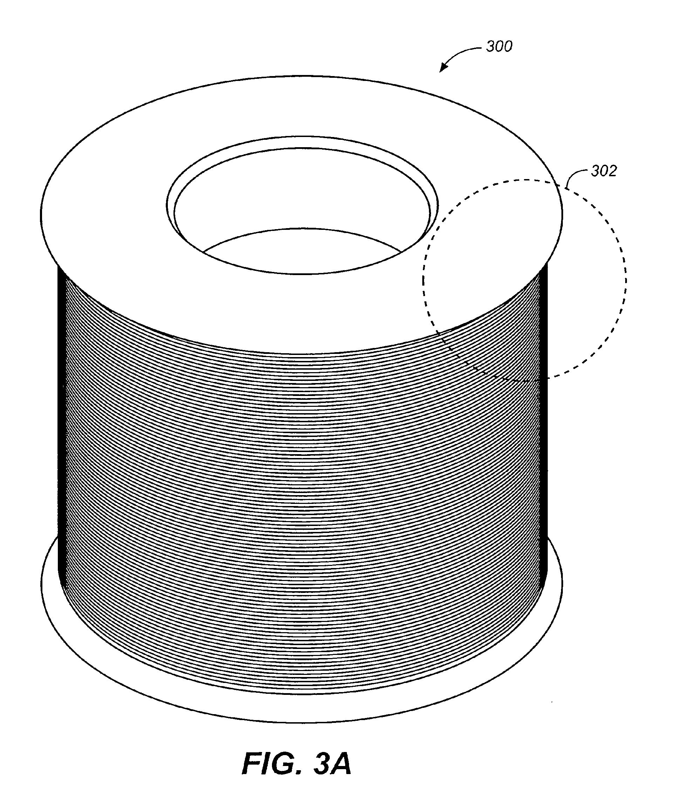

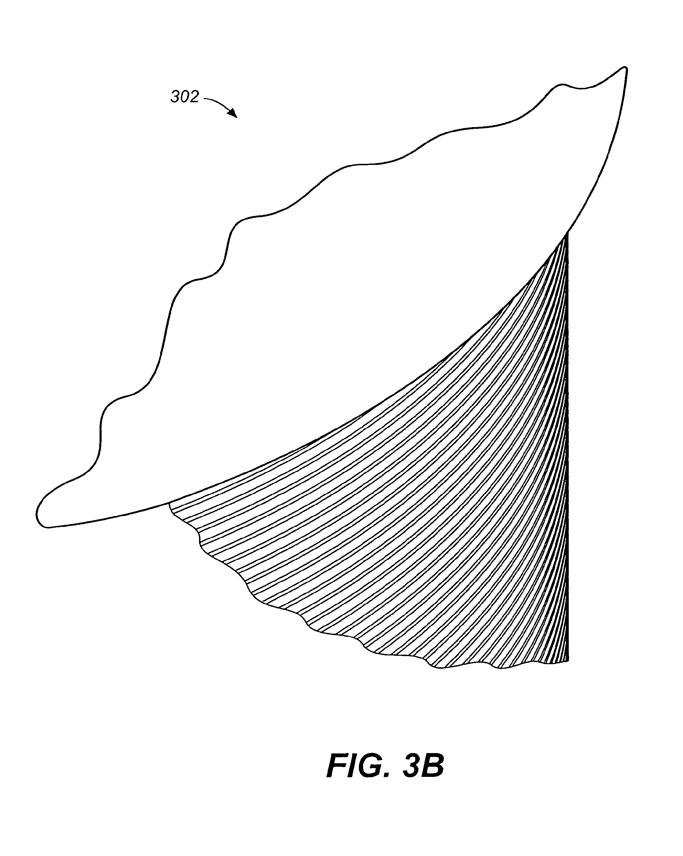

Figure 3A illustrates a guide roller according to embodiments of the invention. A magnified view of portion 302 is shown in Figure 3B. The guide roller may be made out of metal, for example. The helical micro-groove is formed in a constant direction on the outer tape bearing surface of the guide roller, from flange to flange. The micro-groove is formed on the outer surface of the roller with common machine tools, such as a CNC Lathe.

The guide rollers, according to embodiments of the invention, may be coupled to a tape drive to guide the magnetic tape medium of a tape cartridge through a tape path to a magnetic read/write head so that data on the magnetic tape may be read or written.

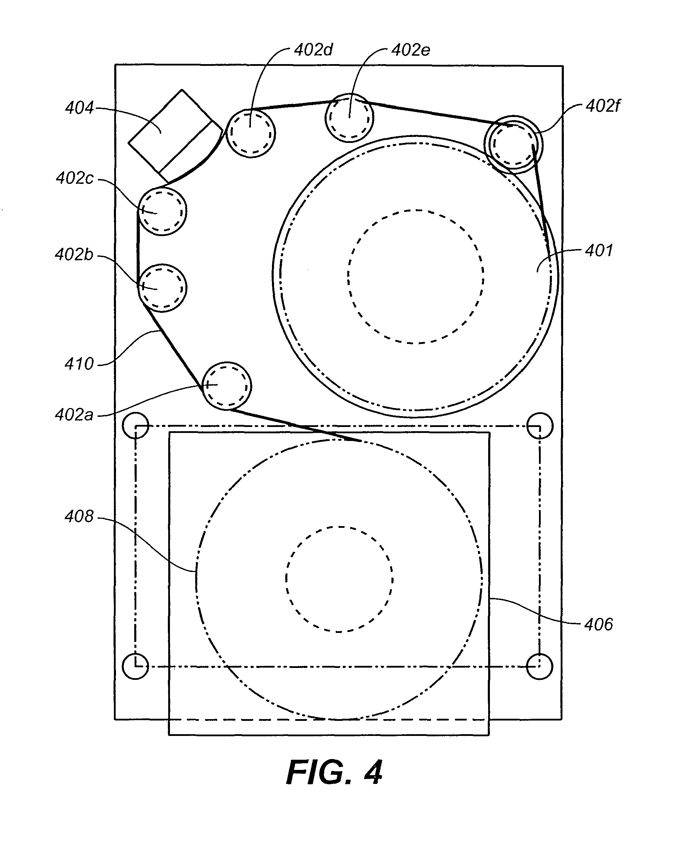

Figure 4 shows a simplified view of an exemplary tape drive 400 having a removable tape cartridge 406 loaded therein. The tape cartridge 406 typically comprises a cartridge housing enclosing a tape medium 410 wound about a rotatable supply reel 408. The tape drive 400 typically includes a take-up reel 401, a plurality of rollers 402a, 402b, 402c, 402d, 402e, and 402f, and a read/write head 404. The take-up reel 401 includes a take-up leader that is coupled to a supply leader extending from one end of the tape medium 410, when the tape cartridge 406 is loaded into the tape drive 400. The tape medium 410 typically comprises a thin film of magnetic material which stores the data. To read or write data, the tape medium 410 is spooled between the take-up reel 401 and the supply reel 408, with rollers 402 guiding the tape medium 410 across the read/write head 404. Upon insertion of the tape cartridge 406 into the tape drive 400, the tape medium 410 on the cartridge reel 408 is coupled to the take-up reel 401 of the tape drive 400. Subsequently, prior to removing the tape cartridge 406 from the tape drive 400, the tape medium 410 is rewound onto the cartridge reel 408 and the supply leader is then uncoupled from the take-up leader. The tape path of the tape medium 410 is created by the plurality of rollers 402a, 402b, 402c, 402d, 402e, 402f between the take-up reel 401 and a read/write head 404. The tape drive may include, but is not limited to, two to six rollers.

When performing read/write operations on the tape medium 410, it is important to maintain acceptable levels of lateral tape motion (LTM) of the tape medium 410, in order to maintain effective contact and alignment between the read/write head 404 and the tape medium 410. The tape may be guided to effectively contact the read/write head 404 by including guide rollers according to embodiments of the invention in the guided tape path.

In accordance with embodiments of the invention, magnetic tape medium edge damage is minimized. Furthermore, tracking performance of the tape drive is improved. Tape drives including embodiments of the invention may achieve position error signals (PES)of 14.8, as opposed to a common PES of 20 or greater. The guide roller according to embodiments of the invention provides for a more consistent and well-controlled tape bearing surface.

The foregoing description of the preferred embodiments of the invention has been presented for the purposes of illustration and description. It is not intended to be exhaustive or to limit the invention to the precise form disclosed. Many modifications and variations are possible in light of the above teaching.

Although the present invention has been described in connection with some embodiments, it is not intended to be limited to the specific form set forth herein. Rather, the scope of the present invention is limited only by the claims. Additionally, although a feature may appear to be described in connection with particular embodiments, one skilled in the art would recognize that various features of the described embodiments may be combined in accordance with the invention. Moreover, aspects of the invention describe in connection with an embodiment may stand alone as an invention.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

## Claims

1. A guide roller mounted in a tape drive for reducing mechanical noise associated with travel of a magnetic tape medium in a tape path, the guide roller comprising:
a cylindrical barrel, rotatably coupled to the tape drive, for guiding a magnetic tape medium, wherein the cylindrical barrel rotates in response to the travel of the magnetic tape medium through the tape path; and
a continuous helical groove forming a spiral on the outer surface of the cylindrical barrel along the length of the cylindrical barrel, wherein the continuous helical groove forms contiguous rings of the spiral.

2. The guide roller of claim 1, wherein the spiral width is equal to the spiral pitch.

3. The guide roller of claim 1, wherein the spiral width is between 30 and 130 microns.

4. The guide roller of claim 1, wherein the spiral width is 80 microns.

5. The guide roller of claim 1, wherein the spiral pitch is less than 340 microns.

6. The guide roller of claim 1, wherein the continuous helical groove is formed by a lathe.

7. The guide roller of claim 1, wherein there is no land area between the contiguous rings of the spiral.

8. The guide roller of claim 1, wherein Rₐ measures 0.075-microns, Rᵥ measures 0.150-microns, and Rₚ measures 0.150-microns.

9. A tape drive system for reducing mechanical noise associated with guiding a magnetic tape medium, the tape drive comprising:
a head element for accessing data on the magnetic tape medium; and
a guide roller, wherein the guide roller comprises:
a cylindrical barrel with a length, rotatably coupled to the tape drive, for guiding a magnetic tape medium, wherein the cylindrical barrel rotates in response to the travel of the magnetic tape medium though a tape path; and
a continuous helical groove forming a spiral on the outer surface of the cylindrical barrel along the length of the cylindrical roller, wherein the continuous helical groove forms contiguous rings of the spiral.

10. The tape drive system of claim 9, further comprising:
a take-up reel; and
a tape path for the magnetic tape medium.

11. The tape drive system of claim 9, further comprising a controller.

12. A method of reducing mechanical noise associated with travel of a magnetic tape medium in a tape path in a tape drive system, the method comprising:
passing the magnetic tape medium between a take-up reel and a supply reel along the tape path such that the magnetic tape medium to contact a guide roller; and
guiding the magnetic tape medium to contact the head element, wherein guiding comprises:
contacting a cylindrical barrel of the guide roller, rotatably coupled to the tape drive, so that guiding a magnetic tape medium rotates the cylindrical barrel in response to the travel of the magnetic tape medium through the tape path, wherein the outer surface of the cylindrical barrel includes a continuous helical groove forming a spiral along the length of the cylindrical barrel, wherein the continuous helical groove forms contiguous rings of the spiral.
